# EUROPEAN PATENT SPECIFICATION

(11) **EP 4 132 808 B1**
(45) Date of publication and mention of the grant of the patent: **13.11.2024**
(21) Application number: 21716183.5
(22) Date of filing: 31.03.2021
(51) Int. Cl.: B60K 7/00, B60K 11/06

(54) **IN-WHEEL MOTOR AND VEHICLE**
RADINTERNER MOTOR UND FAHRZEUG
MOTEUR-ROUE ET VÉHICULE

(30) Priority: 09.04.2020 NL 2025308
(43) Date of publication of application: 15.02.2023
(73) Proprietor: Lightyear IPCo B.V., 5708 JZ Helmond (NL)
(72) Inventor: DIJKEN, Durandus Kornelius, 5644 TP EINDHOVEN (NL); HUIJBEN, Cornelis, 5583 GX WAALRE (NL)
(74) Representative: EP&C
(86) International application number: PCT/EP2021/058492
(87) International publication number: WO 2021/204629

(56) References cited:
- EP-A1- 1 928 680
- EP-B1- 1 928 680
- CN-A- 108 649 738
- KR-A- 20110 006 918
- KR-B1- 101 274 273
- US-A1- 2018 331 601
- US-B2- 7 270 204

## Description

### Technical field of the invention.

The invention relates to an in-wheel motor and a vehicle comprising the in-wheel motor. In particular, the in-wheel motor comprises an air-cooled rotor coaxially surrounding a stator, the stator comprising electromagnets, the electromagnets in working producing heat, the heat at least in part transported from the stator to the rotor by gas.

### Acknowledgement.

The project leading to this application has received funding from the European Union's Horizon 2020 research and innovation program under grant agreement No. 848620.

### Background of the invention.

An in-wheel motor for a vehicle has as main purpose to convert electrical energy to propulsion energy. Typical efficiency for this conversion is 95%, and the rest is converted to heat.

It is noted that the 95% efficiency is achievable for a well-designed motor under good conditions, and that during certain conditions, such as steep hill climbing, lower efficiencies are achieved and thus relatively more heat is produced.

The heat produced is mainly produced in and near the electromagnets in the stator (mainly due to ohmic losses and eddy current losses), and near the permanent magnets in the rotor (due to eddy current losses). It is thus necessary to remove this heat.

In air-cooled in-wheel motors the stator is cooled by radiation and by air moving between the stator and the rotor, the rotor in turn cooled by passing air. The air between stator and rotor may be laminar or turbulent air.

Air cooling results in a simple construction but is rather limited in the amount of heat that can be removed.

An air-cooled in-wheel motor is known from, for example, Korean patent publication KR101330694B1. In this patent a mechanical ventilator is integrated within the rotor to stir the air in the motor. This ventilator improves the heat transfer. The known patent describes the use of air that is sucked in from the outside of the motor, or to use air that is kept inside the motor. Another example of an in-wheel motor with an electric fan for cooling is known from KR101274273B1.

Another in-wheel motor is known from Chinese patent publication CN108649738A. The in-wheel motor comprises a motor shaft on which a rotor core is arranged. The rotor core is matched with magnets on a casing of the in-wheel motor. An inner fan is fixed on the motor shaft. When the in-wheel motor is used, the inner fan starts to work. Outside air enters the in-wheel motor and reduces the temperature inside the motor.

The invention intends to provide an even further improved heat transfer from the stator to the rotor.

### Summary of the invention.

To that end, there is provided, an in-wheel motor comprising a rotor coaxially surrounding a stator. The stator comprises electromagnets. The electromagnets in working produce heat. The heat is at least in part removed from the stator by gas. The motor comprises an electric fan internal to the rotor for displacing the gas.

By using a fan to move (stir) the air between stator and rotor the heat transfer between the two is improved.

The rotor is rotatably connected to the stator, for example, by a bearing such as a rolling element bearing, like a ball bearing or a roller bearing. In another example, the bearing is a sliding bearing or a hydrodynamic bearing or a hydrostatic bearing. The rotor is rotatable relative to the stator along a rotation axis. The rotor surrounds the stator, for example radially and/or axially. For example, the rotor encloses an inner space in which the stator is arranged. In an example, the rotor completely encloses the stator, except for some openings. These openings are sealed to prevent or to limit a gas flow from outside the rotor to the stator and vice versa. These openings are, for example, for accommodating an axle to which the stator is arranged, and/or for accommodating electric wires to provide electric power to the electromagnets and/or for accommodating a conduit to provide liquid and/or gas to the inner space enclosed by the rotor.

The in-wheel motor comprises the stator. For example, the electromagnets are arranged at a most radially outward part of the stator. The stator is, for example, connectable to an axle or an upright of a vehicle. The stator is, for example, rotational symmetric or axisymmetric along the rotation axis. In another example, the stator is not rotational symmetric along the rotation axis.

The electromagnets generate a magnetic field based on an electric current provided to the electromagnets. The electromagnets comprise, for example, a core of ferromagnetic material or the like, e.g. comprising Fe or Co or an Fe alloy, and a coil configured to generate a magnetic field in the ferromagnetic core. The coil as applied is for example a Cu- or Al-wound coil that is wound about a part of the ferromagnetic core of the electromagnet. The magnetic field as generated is based on properties of the electric current, such as amperage, direction and duty cycle. The magnetic field of the electromagnets cooperates with the rotor to generate a drive torque. For example, the rotor comprises permanent magnets. The magnetic field generated by the permanent magnets cooperates with the magnetic field of the electromagnets to create the drive torque. In an example, the rotor comprises ferromagnetic material. In an example, the rotor comprises further electromagnets. The magnetic field generated by the further electromagnets cooperates with the magnetic field of the electromagnets of the stator to generate the drive torque. The drive torque is directed about the rotation axis. The drive torque causes a rotation along the rotation axis of the rotor relative to the stator to accelerate or to decelerate the rotor, depending on the direction of the drive torque and the rotational speed of the rotor relative to the stator. In some situations, the drive torque needs to exceed an initial value before the rotor starts to rotate relative to the stator, for example when the in-wheel motor is used to move a heavy load uphill.

Due to the electrical resistance of the electromagnets of the stator, a part of the electric energy of the electric current through the electromagnets is converted into heat. The heat increases the temperature of the electromagnets. Because the electrical resistance is temperature dependent, the increased temperature further increases the electrical resistance. So it is especially beneficial to keep the electromagnets at a low temperature to operate the in-wheel motor at a high efficiency.

To efficiently create the drive torque, the electromagnets are arranged to form a narrow slit between the electromagnets and the rotor. This narrow slit is referred to as a magnetic gap. Having a small magnetic gap improves the magnetic flux between the electromagnets and the rotor, since the magnetic gap can be considered a resistance for the magnetic flux. So, the smaller the magnetic gap, the easier a magnetic flux can be generated. However, the magnetic gap is difficult to ventilate, thus making it difficult to cool the surfaces of the electromagnets facing the rotor across the magnetic gap. By displacing the gas by the electric fan, the gas is forced to better ventilate in the magnetic gap, causing the temperature of the electromagnets to reduce. By displacing the gas, heat is also removed by the gas from other surfaces of the electromagnets, from surfaces of the stator, and/or surfaces of the rotor.

The electric fan is a device that has a rotor that is able to displace gas. The rotor is for example provided with blades. The flow rate and the flow speed with which the gas is displaced is for example determined by the size of the blades, the rotational speed of the blades and/or the blade pitch of the blades. For example, the electric fan is a centrifugal pump for displacing the gas. In yet another example, the electric fan is an axial pump for displacing the gas. In an example, the electric fan is a cross-flow fan, which is sometimes referred to as a tangential fan or a tubular fan. The gas is displaced transversely across the rotor of the cross-flow fan. The electric fan is powered by electricity. The electric fan is, for example, operatable only at a single rotational speed. The electric fan is switched on when it is desired to transfer heat from the stator, whereas the electric fan is switched off when there is no desire to transfer heat from the stator. For example, the rotational speed of the electric fan is determined by an amperage or a voltage of an electric current through the electric fan. A controller is for example adapted to control the amplitude of the voltage of the electric current to the electric fan to control the rotational speed of the electric fan. For example, the rotational speed is set high in case there is a desire to transfer a lot of heat from the stator, whereas the rotational speed is set low in case there is a desire to transfer only a little amount of heat from the stator. This way, the electric fan is used in an energy efficient way. The desire to transfer heat is for example based on a temperature of the stator, a temperature of the environment, and/or an electric current through the electromagnets. An increase of the electric current through the electromagnets is, for example, an indication that the temperature of the electromagnets will increase shortly thereafter.

The gas is for example air. Preferably, the air is clean air to prevent particles or dirt to attach to the stator or to the inside of the rotor. Especially when particles or dirt enter the magnetic gap between the stator and the rotor, the in-wheel motor may get damaged. To maintain a clean gas inside the rotor, it is preferred to seal the gas inside the rotor from the environment outside the rotor. For example, a seal is arranged between the rotor and an axle onto which the rotor is rotatably arranged. A seal is for example an O-ring or a labyrinth seal. It may be acceptable that the seal has some degree of leakage. The rotor comprises, for example, a pressure-relief valve to prevent the gas pressure in the in-wheel motor to become too large. The gas is, for example, a combination of air with one or more other gasses.

In an embodiment the motor comprises a temperature sensor and a controller attached thereto, the controller controlling the fan in such a way that the amount of gas that is displaced by the fan depends on the temperature of the stator.

Such a temperature-controlled fan enables the fan to work only when, or only as much, as needed, thereby minimizing the energy usage of the electric fan.

The temperature sensor is, for example, arranged in the inner space enclosed by the rotor, such as on the inside of the rotor or on the stator or on one of the electromagnets. The temperature sensor provides a signal that is representative of a temperature in the inner space enclosed by the rotor. In another example, the temperature sensor provides a signal that is representative of an environmental temperature. The temperature sensor is, for example, an NTC-sensor, a PTC-sensor, a thermocouple or a semiconductor based integrated circuit. Based on the signal from the temperature sensor, the controller drives the electric fan. The controller drives the electric fan, for example, based on other information as well, such as the electric current through the electromagnets, the rotational speed of the rotor, and/or an electrical resistance of the electromagnets. The controller drives the electric fan, for example, by increasing or decreasing the rotational speed of the electric fan. For example, the controller continuously drives the electric fan when the in-wheel motor is operated.

In another embodiment the fan is disabled if the temperature of the stator is below a predetermined temperature and enabled if the temperature is above the predetermined temperature.

By controlling the fan with, for example, a thermal relay, the fan can be turned on and off at a predetermined temperature. This is especially attractive when the fan is used only under conditions not occurring too often, for example when climbing a hill.

It is noted that peak loads of the stator can often be absorbed by heat capacity of the stator, and that with a proper design only during prolonged heavy load extra cooling is needed. This may also increase the lifetime of the fan, as the time that the fan is used is reduced.

In still another embodiment the gas in the in-wheel motor has a heat capacity higher than that of dry air at one atmosphere.

By using a gas with a higher heat capacity, heat transfer is improved. Although air (which is mostly nitrogen) already has a rather high heat capacity for a gas, addition of water vapor or other vapor contents to the air increases the heat capacity. To keep the gas with the higher heat capacity inside the rotor, it is beneficial to provide sufficient sealing to prevent or limit leakage of the gas to the environment.

In a further embodiment the gas in the in-wheel motor is pressurized air.

By increasing the gas pressure, the heat capacity, and thus the heat transfer, is improved. For example, the gas pressure is increased with 0.3 atmosphere to allow the use of commonly available sealings, while improving the heat transfer. For example, the vehicle comprises an air pump to provide pressurized air via a conduit to the inner space enclosed by the rotor. For example, a pressure sensor is arranged inside the inner space enclosed by the rotor. Based on a signal from the pressure sensor representative of the pressure inside the inner space enclosed by the rotor, the controller controls the air pump to provide pressurized air. For example, the controller controls the air pump to provide pressurized air in case the pressure is lower than a threshold value and stops providing pressurized air in case the pressure exceeds a threshold value.

In a further embodiment, the in-wheel motor comprises an air valve arranged to provide the pressurized air from outside the in-wheel motor to the inner space enclosed by the rotor.

The air valve provides a supply point to provide the pressurized gas to the inner space. For example, a compressor is connected to the air valve to fill the inner space with pressurized gas. In another example, the air valve is connectable to a gas canister with pressurized gas. The compressor and/or the gas canister are for example arranged on the vehicle. In an example, the air valve is used to provide the pressurized gas when the vehicle undergoes maintenance.

In a further embodiment the electric fan is mounted in a through-hole in the stator.

By mounting the fan on or in the stator, balancing of the wheel is not affected as the fan is not rotating. Also: the electric connection to the fan can be formed as simple (stationary) wires, without the need for a sliding contact or such like. By placing the fan in a through-hole in the stator (for example a circular through-hole), the fan can pump air from one side of the stator to the other side of the stator, the air returning at the perimeter of the stator where the electromagnets reside. For example, the electric fan has an inlet at the one side of the stator and has an outlet at the other side of the stator. The other side of the stator is opposite to the one side of the stator. The electric fan sucks gas into the inlet and propels gas from the outlet. For example, the through-hole extends from one side of the stator to the other side of the stator in a direction parallel to the rotation axis. The electric fan is arranged in the through hole and is arranged to circulate the gas through the inner space by displacing the gas along the one side of the stator, via the magnetic gaps to the other side of the stator. This improves the heat transfer in the magnetic gaps. Preferably, the stator has as few openings as possible, to force a large portion or all of the gas to be displaced via the magnetic gaps.

In a further embodiment, the stator has through-hole extending in an axial direction of the in-wheel motor, wherein the electric fan is arranged to displace the gas through the through-hole.

According to the embodiment, the through-hole extends from the one side of the stator to the other side of the stator along the axial direction of the in-wheel motor. The electric fan displaces the gas through the through-hole along the axial direction. For the gas to circulate, the gas flows through the magnetic gaps, causing an improved heat exchange with the surfaces of the electromagnets in the magnetic gaps. For example, the electric fan is an axial fan that propels the gas in an axial direction through the through-hole. The gas is then guided in a radial direction by one side of the stator and the rotor towards the magnetic gaps, and then guided in a radial direction by the other side of the stator and the rotor back to the electric fan. In this example, the gas flows from the electric fan to the through-hole before the gas flows through the magnetic gaps. In another example, the electric fan is a radial fan, such as a centrifugal pump. The radial fan propels the gas in a radial direction to the magnetic gaps via one side of the stator and the rotor. The gas is then guided in a radial direction by the other side of the stator and the rotor to the through-hole. The gas flows through the through-hole back to the electric fan. In this example, the gas flows from the electric fan to the magnetic gaps before the gas flows through the through-hole.

In an embodiment, the in-wheel motor comprises a guiding element. The rotor comprises a rotor surface. The guiding element arranged on the rotor surface. The electric fan is arranged radially inward of the electromagnets. The electric fan is arranged to displace the gas towards the rotor surface. The guiding element is adapted to divide the gas into a radially outward flow and a radially inward flow.

According to this embodiment, the electric fan displaces the gas towards the guiding element on the rotor surface. The guiding element divides the gas into a radially outward flow and a radially inward flow. By dividing the gas into the two flows, the gas is distributed better over the rotor surface, allowing for an improved heat transfer between the gas and the rotor. Because the rotor faces an outside environment, the rotor is able to remove heat from the in-wheel motor. So by improving the heat transfer between the gas and the rotor, the rotor is able to transfer more heat to the outside environment. This results in an improved cooling of the in-wheel motor. Further, the guiding element may be adapted to determine a desired amount of the radially inward flow and the radially outward flow. Especially when the through-hole is arranged off-center with the rotational axis, the flow resistance in the inner space may cause that some magnetic gaps receive more gas flow than other magnetic gaps. Arranging the through-hole off-center with the rotational axis is for example needed to provide sufficient space for other components of the in-wheel motor along the rotational axis. By providing the guiding element at a desired location relative to the through hole and/or by providing the guiding element with a desired shape, the radially inward flow and the radially outward flow can be adjusted to provide a more evenly distribution of the flow of gas along the magnetic gaps. For example, the guiding element has two curved surfaces. Each of the curved surfaces has a radius that is different from the other. One curved surface faces partly towards the through-hole and partly radially outward. The other curved surface faces partly towards the through-hole and partly radially inward. For example, the guiding element is arranged on the rotor surface relative to the through-hole that one curved surface receives a larger portion of the flow of gas than the other curved surface. In another example, the guiding element has triangular cross-section in a radial direction. The triangular cross-section defines three surfaces: a first surface connected to the rotor surface, a second surface arranged at an angle relative to the through hole to guide part of the flow of gas radially outward, and a third surface arranged at an angle relative to the through hole to guide the other part of the flow of gas radially inward. For example, the second surface is larger or smaller than the third surface. For example, the angle relative to the through hole of the second surface is larger or smaller than the angle relative to the through hole of the third surface. By selecting the sizes and angles for the second surface and the third surface, the gas is divided over the radial inward flow and the radial outward flow as desired.

In an embodiment, the in-wheel motor comprises at least one fin. The rotor comprises a rotor surface. The at least one fin is arranged on the rotor surface. The electric fan is arranged to displace the gas along the at least one fin.

According to this embodiment, the gas is displaced along the fin, transferring heat with the fin. Because the fin is arranged on the rotor surface, the fin is able to transfer heat to the rotor. The rotor is able to transfer the heat to the outside environment. By providing the fin, an additional surface is provided via which the gas is able to transfer heat. In addition, the fin causes, for example, the flow of gas to become more turbulent. The heat exchange with the gas improves when the flow of gas becomes more turbulent. Because of this additional surface, the cooling of the in-wheel motor is improved. For example, the fin has a cylindrical shape, wherein an end surface of the cylindrical shape is connected to the rotor surface. For example, the fin is a body having a rectangular cross-section or a hexagonal cross-section or an octagonal cross-section. For example, a largest surface of the fin is arranged perpendicular to the flow of gas, to provide a high increase in heat transfer. In another example, the largest surface of the fin is arranged parallel to the flow of gas, to provide an increase in heat transfer with only a limited increase of the flow resistance for the flow of gas. Multiple fins, such as an array of fins, are arranged on the rotor surface, for example.

In an embodiment, the at least one fin is spiral shaped.

According to this embodiment, the fin does not only provide an increased surface with which the gas is able to transfer heat, the spiral shape of the fin creates an additional displacement of the gas. Because the fin is connected to the rotor, the spiral shape of the fin causes the gas to be displaced when the rotor is rotating. The spiral shape radially displaces the gas when the rotor is rotating. So even when the electric fan is disabled, the spiral shape provides at least some displacement of the gas, and thus for some heat transfer. In a scenario when additional heat transfer is desired, such as driving up a steep hill, the electric fan is enabled causing the gas to displace with a larger speed.

For example, structures on the stator and/or other structures on the rotor improve the heat transfer further.

In another embodiment a vehicle is equipped with one or more in-wheel motors according to the invention.

The vehicle can for example be a moped, a motorbike, a car, a boat. For example, the vehicle is an electric car.

In an embodiment, the vehicle has a conduit and a HVAC-unit. The HVAC-unit is adapted to extract water from air. The HVAC-unit is adapted to provide the extracted water via the conduit to the in-wheel motor.

According to this embodiment, the vehicle has a HVAC-unit, which stands for Heating, Ventilation and Air-Conditioning unit. For example, the HVAC-unit is arranged to provide heated air and/or outside air and/or cooled air into a cabin of the vehicle. The HVAC-unit is adapted to extract water from the air. The air is, for example, outside air. The air is, for example, air inside the cabin that has become too humid. Air inside the cabin may become too humid by breathing and transpiration of people inside the cabin, or by wet objects in the cabin, such as wet rain gear. The HVAC-unit is adapted to extract water from the air, for example, by a separate system of the HVAC-unit. The separate system comprises, for example, a condenser to condense water vapor in the air into liquid water. In another example, the water is extracted as a side effect of the air-conditioning system. The air-conditioning system comprises a condenser and an evaporator to remove heat from the air. As a side effect, water is extracted from the air. Typically, this water is dumped outside the vehicle. However, according to the invention, the water extracted by the HVAC is provided to the in-wheel motor by the conduit. For example, the nozzle is arranged at the end of the conduit to vaporize the water in the inner space enclosed by the rotor. The controller is for example adapted to control the amount of water that enters the inner space.

### Brief description of the drawings.

The invention is now elucidated using figures, in which identical reference signs indicate corresponding features. To that end:
Fig. 1 schematically shows a cross-section of the motor according to the invention.
Fig. 2 schematically shows a cross-section of the motor according to a second embodiment of the invention.

### Detailed description of the invention.

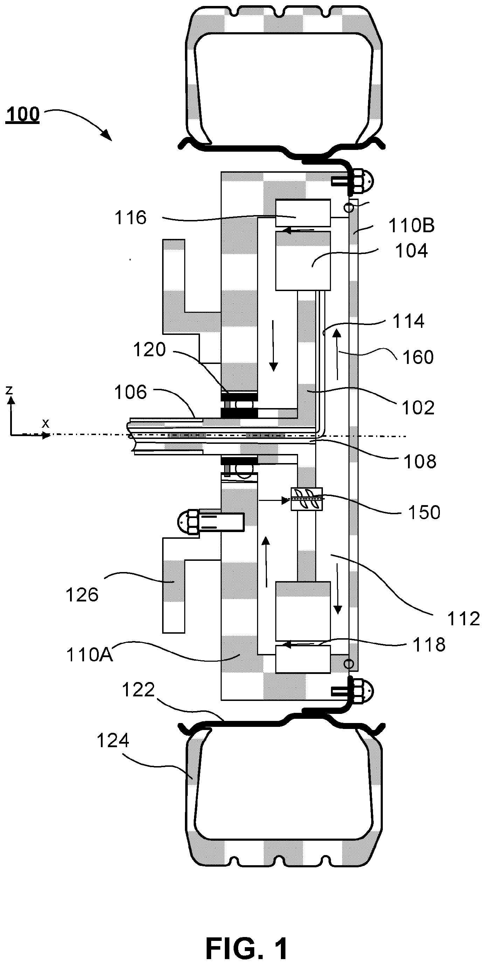

Fig. 1 schematically shows a cross-section of the motor according to the invention.

The in-wheel motor 100 shows a stator 102 with electromagnets 104. An axle 106 is fixedly connected to the stator. A rotor 1 10A/110B coaxially surrounding the stator 102 encloses an inner volume 112 where the stator 102 resides. The rotor comprises a multitude of permanent magnets 116. The motor 100 comprises a wheel bearing 120 radially positioned between the rotor and the axle 106 and axially positioned between the stator 102 and the end of the axle 106 sticking out of the motor 100. One or more electric conductors 114 pass through a bore 108 in the axle 106 to the inner volume 112. The electric conductors 114 feed power to the electromagnets 104. The wheel rim 122 for carrying a tyre 124 is removably connected to the rotor. On the rotor a disk 126 of a brake disk is mounted to enable (mechanical) braking.

In a circular through-hole in the stator 102 an electric fan 150 is mounted. In working the electric fan 150 forces air (gas) to pass through the stator 102, to the perimeter of the stator 102, through the magnetic gap 118 between permanent magnets 116 and electromagnets 104 back towards the inlet of the fan 150. The flow of the gas 160 is indicated by the arrows. The electric fan 150 is arranged internally to the rotor and displaces the gas 160 through the inner space 112 as indicated by the arrows.

By applying a three-phase electric signal to the electromagnets 104, a rotating magnetic field is generated. The interaction of the rotating magnetic field together with the magnetic field of the permanent magnets 116 causes a torque between rotor and stator 102. This torque is then transferred to the road and causes propulsion for the vehicle. Efficiency of such a motor is well above 90%, that is: in normal use less than 10% of the applied electric power is dissipated in heat, and most of it is transferred in mechanic power used for propulsion (to accelerate the vehicle, to overcome roll resistance, to overcome aerodynamical drag, etc). Therefore, the amount of heat that is dissipated is limited.

A major contributor for transport of the heat from stator 102 to rotor is due to the thermal capacitance of the gas between stator 102 and rotor. Especially if the gas 160 is moving at high speed, and in a turbulent fashion, this transport becomes high. In part this is already caused by the relative movement of rotor and stator 102, especially if one or both are equipped with a multitude of small dimples or projections. The fan 150 can be seen as an efficient turbulent air mixer, homogenising the air inside the motor chamber, i.e., the inner space 112. The more severe the mixing, the higher the heat transfer from stator 102 to rotor.

As shown by the arrows, the electric fan 150 displaces the gas along parts 110A and 110B of the rotor, and through the magnetic gaps 118. Heat generated by the electromagnets 104 during operational use is transferred from the electromagnets 104 to the gas 160 in the magnetic gap 118. The heated gas is then displaced along the rotor, causing the heat to be transferred from the heated gas 160 to the rotor. The rotor transfers the heat to the outside environment.

The power for the electric fan 150 is fed into the rotor through the same bore(s) that carry the electric conductors 114 that feed the electromagnets, i.e., bore 108. As an alternative the power can be derived from the star- or wye point of the three-phase connection.

The fan 150 can be controlled for high or low air displacement ('speed'), according to the temperature of the stator 102. Also, the fan 150 can be kept active (cooling) after the vehicle is parked, until the stator 102 is below a pre-set temperature.

A simple solution is to power the fan 150 via a bi-metal switch (a clixon) or the like.

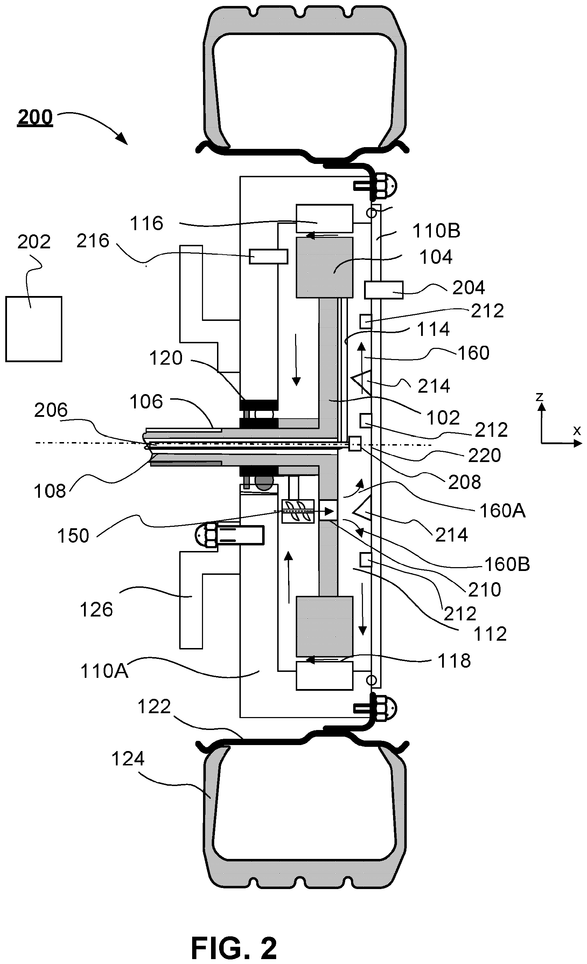

A second embodiment according to the invention is depicted in Fig. 2. The second embodiment has the same features as the embodiment of Fig. 1, except for the following.

The in-wheel motor 200 comprises a temperature sensor 216 and a controller 202 attached thereto. The controller 202 is adapted to control the fan 150 in such a way that the amount of gas 160 that is displaced by the electric fan 150 depends on the temperature of the stator 102.

The electric fan 150 is, for example, disabled if the temperature of the stator 102 is below a predetermined temperature and enabled if the temperature is above the predetermined temperature.

The gas 160 has a heat capacity higher than that of dry air at one atmosphere. The gas 160 is pressurized air. The in-wheel motor 200 comprises an air valve 204 arranged to provide the pressurized air from outside the in-wheel motor 200 to the inner space 112 enclosed by the rotor.

The in-wheel motor 200 comprises a conduit 206 arranged to transfer water from outside the in-wheel motor 200 to the inner space 112 enclosed by the rotor. A nozzle 208 is arranged at the end of the conduit 206 in the inner space 112. The nozzle 208 is adapted to vaporize water entering the inner space 112. The conduit 206 is connected to the HVAC-unit of the vehicle. The HVAC-unit extracts water from air and provides the water through the conduit 206. The controller 202 controls the amount of water that is provided through the conduit 206, for example, by controlling a valve in the conduit 206.

The stator 102 has a through hole 210 extending in an axial direction of the in-wheel motor 200. The axial direction is in the x-direction. The axial direction is along the rotation axis. The z-direction is in the radial direction of the in-wheel motor 200. The electric fan 150 is arranged to displace the gas 160 through the through-hole 210. As shown in Fig. 2, the electric fan 150 is arranged on the left side of the stator 102. The electric fan 150 is attached to the stator 102. The electric fan 150 propels the gas 160 in the axial direction to displace the gas 160 from the left side of the stator 102 to the right side of the stator 102 via the through-hole 210. The gas 160 flows via the magnetic gaps 118 back to the electric fan 150 by flowing radially inward.

The in-wheel motor 200 comprises a guiding element 214. The rotor comprises a rotor surface 220. The guiding element 214 is arranged on the rotor surface 220. The electric fan 150 is arranged radially inward of the electromagnets 104. The electric fan 150 is arranged to displace the gas 160 towards the rotor surface 220. The guiding element 214 is adapted to divide the gas 160 into a radially outward flow 160B and a radially inward flow 160A. The radially outward flow 160B and the radially inward flow 160A are indicated by the two curved arrows. The guiding element 214 is arranged axisymmetrically along the rotation axis of the in-wheel motor 200. That is why the guiding element 214 is depicted twice in Fig. 2. By arranging the guiding element axisymmetrically, there is always a part of the guiding element 214 facing the through-hole 210, independently of the rotational position of the rotor. Alternatively, the guiding element 214 is not axisymmetrically, but rotational symmetrically. For example, the guiding element 214 comprises multiple elements that are separate from each other and which are arranged rotational symmetrically relative to the rotation axis on the rotor surface 220.

The in-wheel motor 200 comprises a plurality of fins 212. The fins 212 are arranged on the rotor surface 220. The fins 212 provide an additional surface that contacts the gas 160 to improve the heat transfer from the gas 160. The fin 212 is for example shaped as a spiral. The spiral shape is formed on the rotor surface 220. The spiral shape is, for example, made by a single fin 212, or made by a plurality of fins 212 that positioned along a spiral shaped line on the rotor surface 202.

It is noted that applications with more than one fan are foreseen, as well as applications in which the orientation of the axis of the fan 150 is axial or radial. It might be beneficial to pulsate the air circulation by varying the fan speed, or to change the direction of the air stream by (temporarily) reversing the fan's rotation direction.

Through holes in the stator 102 near or between the electromagnets 104 may also have a beneficial effect for the cooling of the electromagnets 104.

This invention may be combined with a mechanical ventilator, for example a ventilator described in patent publication KR101330694B1.

## Claims

1. In-wheel motor (100, 200) comprising a rotor (110A, 110B) coaxially surrounding a stator (102), the stator comprising electromagnets (104), the electromagnets in working producing heat, the heat at least in part removed from the stator by gas (160), **characterized in that** the motor comprises an electric fan (150) internal to the rotor for displacing the gas.

2. The in-wheel motor of claim 1 in which the motor comprises a temperature sensor (216) and a controller (202) attached thereto, the controller controlling the fan in such a way that the amount of gas that is displaced by the fan depends on the temperature of the stator.

3. The in-wheel motor of claim 1 or claim 2 in which the fan is disabled if the temperature of the stator is below a predetermined temperature and enabled if the temperature is above the predetermined temperature.

4. The in-wheel motor of any of the preceding claims in which the gas has a heat capacity higher than that of dry air at one atmosphere.

5. The in-wheel motor of claim 4 in which the gas is pressurized air.

6. The in-wheel motor of claim 5, comprising an air valve (204) arranged to provide the pressurized air from outside the in-wheel motor to an inner space (112) enclosed by the rotor.

7. The in-wheel motor of any one of claims 4-6, comprising a conduit (206) arranged to transfer water from outside the in-wheel motor to an inner space (112) enclosed by the rotor.

8. The in-wheel motor of claim 7, comprising a nozzle (208) arranged at an end of the conduit in the inner space enclosed by the rotor, wherein the nozzle is adapted to vaporize water entering the inner space.

9. The in-wheel motor of any of the preceding claims in which the electric fan is mounted in a through-hole in the stator.

10. The in-wheel motor of any of the preceding claims, wherein the stator has a through-hole (210) extending in an axial direction of the in-wheel motor, wherein the electric fan is arranged to displace the gas through the through-hole.

11. The in-wheel motor of claim 9 or 10, comprising a guiding element (214), wherein the rotor comprises a rotor surface (220), wherein the guiding element is arranged on the rotor surface, wherein the electric fan is arranged radially inward of the electromagnets, wherein the electric fan is arranged to displace the gas towards the guiding element on the rotor surface, wherein the guiding element is adapted to divide the gas into a radially inward flow (160A) and a radially outward flow (160B).

12. The in-wheel motor of any of the preceding claims, comprising at least one fin (212), wherein the rotor comprises a rotor surface (220), wherein the at least one fin is arranged on the rotor surface, wherein the electric fan is arranged to displace the gas along the at least one fin.

13. The in-wheel motor of claim 12, wherein the at least one fin is spiral shaped.

14. Vehicle equipped with one or more in-wheel motors according to any of the preceding claims.

15. Vehicle according to claim 14, comprising a conduit (206) and a HVAC-unit, wherein the HVAC-unit is adapted to extract water from air, wherein the HVAC-unit is adapted to provide the extracted water via the conduit to the in-wheel motor.

## Patentansprüche

1. Radnabenmotor (100, 200), der einen Rotor (110A, 110B) umfasst, der einen Stator (102) koaxial umgibt, wobei der Stator Elektromagnete (104) umfasst, wobei die Elektromagnete im Betrieb Wärme erzeugen, wobei die Wärme zumindest teilweise durch Gas (160) vom Stator abgeführt wird, **dadurch gekennzeichnet, dass** der Motor einen elektrischen Ventilator (150) intern zum Rotor zum Verdrängen des Gases umfasst.

2. Radnabenmotor nach Anspruch 1, wobei der Motor einen Temperatursensor (216) und eine daran angebrachte Steuerung (202) umfasst, wobei die Steuerung den Ventilator derart steuert, dass die Menge an Gas, die vom Ventilator verdrängt wird, von der Temperatur des Stators abhängt.

3. Radnabenmotor nach Anspruch 1 oder Anspruch 2, wobei der Ventilator deaktiviert wird, wenn die Temperatur des Stators unter einer vorbestimmten Temperatur liegt, und aktiviert wird, wenn die Temperatur über der vorbestimmten Temperatur liegt.

4. Radnabenmotor nach einem der vorhergehenden Ansprüche, wobei das Gas eine Wärmekapazität aufweist, die höher als die von trockener Luft bei einer Atmosphäre ist.

5. Radnabenmotor nach Anspruch 4, wobei das Gas Druckluft ist.

6. Radnabenmotor nach Anspruch 5, umfassend ein Luftventil (204), das dazu angeordnet ist, die Druckluft von außerhalb des Radnabenmotors zu einem vom Rotor umschlossenen Innenraum (112) zu liefern.

7. Radnabenmotor nach einem der Ansprüche 4-6, umfassend eine Leitung (206), die dazu angeordnet ist, Wasser von außerhalb des Radnabenmotors zu einem vom Rotor umschlossenen Innenraum (112) zu transportieren.

8. Radnabenmotor nach Anspruch 7, umfassend eine Düse (208), die an einem Ende der Leitung im vom Rotor umschlossenen Innenraum angeordnet ist, wobei die Düse dazu ausgelegt ist, in den Innenraum eintretendes Wasser zu verdampfen.

9. Radnabenmotor nach einem der vorhergehenden Ansprüche, wobei der elektrische Ventilator in einer Durchgangsöffnung im Stator montiert ist.

10. Radnabenmotor nach einem der vorhergehenden Ansprüche, wobei der Stator eine Durchgangsöffnung (210) aufweist, die sich in einer axialen Richtung des Radnabenmotors erstreckt, wobei der elektrische Ventilator dazu angeordnet ist, das Gas durch die Durchgangsöffnung zu verdrängen.

11. Radnabenmotor nach Anspruch 9 oder 10, umfassend ein Führungselement (214), wobei der Rotor eine Rotorfläche (220) umfasst, wobei das Führungselement auf der Rotorfläche angeordnet ist, wobei der elektrische Ventilator radial einwärts von den Elektromagneten angeordnet ist, wobei der elektrische Ventilator dazu angeordnet ist, das Gas hin zu dem Führungselement auf der Rotorfläche zu verdrängen, wobei das Führungselement dazu ausgelegt ist, das Gas in einen radial einwärts gerichteten Strom (160A) und einen radial auswärts gerichteten Strom (160B) zu unterteilen.

12. Radnabenmotor nach einem der vorhergehenden Ansprüche, umfassend mindestens eine Rippe (212), wobei der Rotor eine Rotorfläche (220) umfasst, wobei die mindestens eine Rippe auf der Rotorfläche angeordnet ist, wobei der elektrische Ventilator dazu angeordnet ist, das Gas entlang der mindestens einen Rippe zu verdrängen.

13. Radnabenmotor nach Anspruch 12, wobei die mindestens eine Rippe spiralförmig ist.

14. Fahrzeug, das mit einem oder mehreren Radnabenmotoren nach einem der vorhergehenden Ansprüche ausgestattet ist.

15. Fahrzeug nach Anspruch 14, umfassend eine Leitung (206) und eine HVAC-Einheit, wobei die HVAC-Einheit dazu ausgelegt ist, Wasser aus Luft zu extrahieren, wobei die HVAC-Einheit dazu ausgelegt ist, das extrahierte Wasser über die Leitung zum Radnabenmotor zu liefern.

## Revendications

1. Moteur-roue (100, 200) comprenant un rotor (110A, 110B) entourant de façon coaxiale un stator (102), le stator comprenant des électro-aimants (104), les électro-aimants en fonctionnement produisant de la chaleur, la chaleur étant au moins en partie supprimée du stator par un gaz (160), **caractérisé en ce que** le moteur comprend un ventilateur électrique (150) interne au rotor pour déplacer le gaz.

2. Moteur-roue selon la revendication 1, dans lequel le moteur comprend un capteur de température (216) et un dispositif de commande (202) fixé à celui-ci, le dispositif de commande commandant le ventilateur de telle sorte que la quantité de gaz qui est déplacée par le ventilateur dépend de la température du stator.

3. Moteur-roue selon la revendication 1 ou 2, dans lequel le ventilateur est désactivé si la température du stator est inférieure à une température prédéterminée et activé si la température est supérieure à la température prédéterminée.

4. Moteur-roue selon l'une quelconque des revendications précédentes, dans lequel le gaz a une capacité de chauffage supérieure à celle de l'air sec à une atmosphère.

5. Moteur-roue selon la revendication 4, dans lequel le gaz est de l'air sous pression.

6. Moteur-roue selon la revendication 5, comprenant un clapet d'air (204) agencé pour fournir l'air sous pression provenant de l'extérieur du moteur-roue à un espace interne (112) enfermé par le rotor.

7. Moteur-roue selon l'une quelconque des revendications 4 à 6, comprenant un conduit (206) agencé pour transférer de l'eau de l'extérieur du moteur-roue à un espace interne (112) enfermé par le rotor.

8. Moteur-roue selon la revendication 7, comprenant une buse (208) disposée à une extrémité du conduit dans l'espace interne enfermé par le rotor, dans lequel la buse est conçue pour vaporiser l'eau entrant dans l'espace interne.

9. Moteur-roue selon l'une quelconque des revendications précédentes, dans lequel le ventilateur électrique est monté dans un trou traversant dans le stator.

10. Moteur-roue selon l'une quelconque des revendications précédentes, dans lequel le stator comprend un trou traversant (210) s'étendant dans une direction axiale du moteur-roue, dans lequel le ventilateur électrique est agencé pour déplacer le gaz à travers le trou traversant.

11. Moteur-roue selon la revendication 9 ou 10, comprenant un élément de guidage (214), dans lequel le rotor comprend une surface de rotor (220), dans lequel l'élément de guidage est disposé sur la surface de rotor, dans lequel le ventilateur électrique est disposé radialement vers l'intérieur des électro-aimants, dans lequel le ventilateur électrique est agencé pour déplacer le gaz vers l'élément de guidage sur la surface de rotor, dans lequel l'élément de guidage est conçu pour diviser le gaz en un flux intérieur radial (160A) et un flux extérieur radial (160B).

12. Moteur-roue selon l'une quelconque des revendications précédentes, comprenant au moins une ailette (212), dans lequel le rotor comprend une surface de rotor (220), dans lequel la ou les ailettes sont disposées sur la surface de rotor, dans lequel le ventilateur électrique est agencé pour déplacer le gaz le long de la ou des ailettes.

13. Moteur-roue selon la revendication 12, dans lequel la ou les ailettes sont en forme de spirale.

14. Véhicule équipé d'un ou plusieurs moteurs-roues selon l'une quelconque des revendications précédentes.

15. Véhicule selon la revendication 14, comprenant un conduit (206) et une unité de CVC, dans lequel l'unité de CVC est conçue pour extraire l'eau de l'air, dans lequel l'unité de CVC est conçue pour fournir l'eau extraite par le biais du conduit au moteur-roue.
